(19) Europäisches Patentamt
European Patent Office
Office européen des brevets

(11) Numéro de publication: **0 275 802 B1**

(12) # FASCICULE DE BREVET EUROPEEN

(45) Date de publication de fascicule du brevet: **29.05.91**

(51) Int. Cl.[5]: **C08G 63/68**, B32B 27/36

(21) Numéro de dépôt: **87420337.5**

(22) Date de dépôt: **14.12.87**

(54) **Procédé d'obtention de films polyester à revêtement de polychlorure de vinylidène et nouveaux films composites ainsi obtenus.**

(30) Priorité: **21.01.87 FR 8700823**

(43) Date de publication de la demande: **27.07.88 Bulletin 88/30**

(45) Mention de la délivrance du brevet: **29.05.91 Bulletin 91/22**

(84) Etats contractants désignés: **AT BE CH DE ES FR GB GR IT LI LU NL SE**

(56) Documents cités:

**JAPANESE PATENTS GAZETTE, section chemical, semaine C/03, 27 février 1980, page 4, Derwent Publications Ltd, Londres, GB; & JP-A-54 153 883 (TOYOBO K.K.) 04-12-1979**

(73) Titulaire: **RHONE-POULENC FILMS
25, quai Paul Doumer
F-92408 Courbevoie(FR)**

(72) Inventeur: **Grosjean, Pierre
14, rue Alexandre Berthier
F-69110 Sainte-Foy-Les-Lyon(FR)**

(74) Mandataire: **Rioufrays, Roger et al
RHONE-POULENC INTERSERVICES Service Brevets Chimie Centre de Recherches de Saint-Fons B.P. 62
F-69192 Saint-Fons Cédex(FR)**

**EP 0 275 802 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet un procédé de préparation de films polyester à revêtement en polychlorure de vinylidène (PVDC) à adhérence améliorée par une couche d'un primaire d'adhérence et les films polyester composites orienté à revêtement de PVDC ainsi obtenus.

Les films en polyester orientés constituent un matériau de choix pour l'emballage en raison de leurs propriétés mécaniques et de leur transparence. On sait cependant qu'en raison de leur inertie chimique, de leur cristallinité ou de leur relative perméabilité aux gaz et à la vapeur d'eau , il s'est avéré nécessaire de les pourvoir d'un revêtement propre à faire disparaître tout ou partie de ces défauts et à leur communiquer de nouvelles propriétés. Ainsi on a proposé d'appliquer, sur au moins un face des films polyester orientés, un revêtement de polychlorure de vinylidène pour obtenir des pellicules pour emballage présentant d'une part d'excellentes propriétés d'imperméabilité aux gaz (notamment au gaz carbonique et à l'oxygène) et à la vapeur d'eau, et d'autre part une excellente aptitude au scellage à chaud (thermoscellabilité). A cette fin, on fait appel à des émulsions ou dispersions aqueuses de polychlorure de vinylidène ou de copolymères du chlorure de vinylidène avec une quantité mineure d'un ou plusieurs monomères insaturés. Ces dispersions sont déposées par les procédés usuels d'enduction (par exemple par immersion, pulvérisation, enduisage au rouleau) sur le film polyester après orientation par étirage (enduction en reprise) : cf. brevets français 1.255.353 ; 1.478.603 par exemple. Les revêtements ainsi obtenus présentent cependant l'inconvénient de mal adhérer au film polyester support. Pour améliorer la liaison entre le film polyester et le revêtement en PVDC, on a proposé de mettre en place sur la face du film destinée à recevoir ledit revêtement une couche d'ancrage ou couche primaire d'adhérence. Divers matériaux polymères ont été proposés pour atteindre cet objectif. On a plus particulièrement eu recours à l'emploi de solutions organiques de polyuréthannes qui se sont révélées les plus avantageuses au regard de l'amélioration de l'adhérence du PVDC aux polyesters. Toutefois, la mise en oeuvre de solvants organiques présentent de nombreux inconvénients aux plans industriels (par exemple du point de vue hygiène et sécurité) et économique (investissements nécessités par la récupération des solvants). L'industrie du film a donc cherché à s'affranchir de l'utilisation de primaires d'adhérence de ce type. Pour cela, on a proposé dans la demande de brevet japonais publiée sous le n° 58/147 354 d'améliorer l'adhérence du PVDC aux films polyester en faisant appel à des émulsions aqueuses de mélanges de PVDC et d'un copolyester dispersable dans l'eau présentant une pluralité de motifs récurrents à groupes hydroxysulfonyles ($-SO_3H$) ou leurs sels alcalins ou alcalino-terreux, dénommés ci-après groupes oxysulfonyles. Pour intéressante qu'elle soit, cette solution n'est pas exempte d'inconvénients. Tout d'abord elle implique le recours à des copolyesters à forte teneur en motifs récurrents à groupes oxysulfonyles pour assurer la dispersabilité dans l'eau des copolyesters. Par ailleurs la couche de revêtement de PVDC ainsi obtenue est rendue plus sensible à l'humidité du fait de la présence d'un copolyester hydrophile dans le revêtement de surface. L'industrie du film est donc à la recherche d'un moyen permettant tout à la fois d'améliorer l'adhérence du PVDC aux films polyester sans nuire à l'homogénéité du revêtement et sans exiger le recours à des solutions organiques de primaires d'adhérence. La présente invention concerne précisément un tel moyen. Plus spécifiquement :

- un premier objet de la présente invention réside dans un procédé d'obtention de films polyester composites orientés comportant un revêtement de PVDC à adhérence améliorée au support polyester.
- un deuxième objet de la présente invention réside dans de nouveaux films polyester composites à revêtement PVDC présentant une adhérence améliorée au support polyester.

Plus spécifiquement encore un premier objet de la présente invention réside dans un procédé d'obention de films polyester composites orientés constituées par un film support (A) d'un polyester cristallin ou semi-cristallin comportant, sur au moins une de ses faces, une couche contigüe d'un revêtement primaire d'adhérence (B) et une couche d'un revêtement de PVDC (C) déposée sur ladite couche (B) par enduction d'un latex aqueux caractérisé en ce que l'on procède à la coextrusion d'un polyester cristallisable (a) et d'un matériaux polymère à base d'un copolyester comportant une pluralité de motifs récurrents à groupes oxysulfonyles sous forme d'un film composite comprenant une couche (A) de polyester amorphe et au moins une couche (B), au refroidissement dudit film, à son étirage dans un moins une direction, à la thermofixation du film étiré puis à son enduction au moyen d'un latex aqueux de PVDC et enfin au séchage du revêtement ainsi obtenu, puis à la cristallisation du PVDC.

On a constaté que la mise en place, préalablement à l'enduction du latex de PVDC, d'une couche primaire d'adhérence à base d'un copolyester à motifs récurrents à groupes oxysulfonyles (dénommés par la suite "copolyesters sulfonés" pour raison de commodité) se traduit par une amélioration de l'adhérence du revêtement de PVDC sans nuire à son homogénéité. Par ailleurs, le procédé selon l'invention présente

de nombreux avantages au plan de la production industrielle. En effet, il supprime la nécessité de procéder à une double enduction en reprise (sur un film polyester orienté) :

a) par une composition pour primaire d'adhérence (généralement en solution organique);

b) par le latex aqueux de PVDC,

qui implique des séchages successifs des revêtements.

En outre, le procédé selon l'invention s'intègre parfaitement dans le processus industriel de fabrication des films car le film coextrudé peut être utilisé à d'autres fins que l'obtention d'un composite à revêtement PVDC. Le recours à un primaire d'adhérence à base d'un copolyester sulfoné permet de faire l'économie d'un traitement corona du support polyester préalablement au dépôt du primaire. Enfin le procédé revendiqué permet d'obtenir des films présentant à la fois d'excellentes propriétés barrières et une excellente adhérence du revêtement PVDC.

Par polyester cristallisable on désigne des polyesters ou copolyesters qui, après extrusion à l'état fondu à travers une filière puis étirage du polymère amorphe, conduisent à des polyesters ou copolyesters cristallins ou semi-cristallins. La cristallinité des polymères est déterminée par les moyens usuels bien connus du spécialiste tels que la diffraction des rayons X, l'analyse thermique différentielle (cf. S.H.LIN et al J. Polymer Sci. Polymer Symposium 71 121-135 [1984]) et le test de densité.

Les polyesters cristallisables mis en oeuvre pour la préparation de la couche support (A) sont les polyesters et copolyesters utilisés habituellement pour l'obtention des films polyesters orientés par étirage et présentant, après étirage, une structure cristalline ou semi-cristalline.

A ce titre, on peut faire appel à tout polyester filmogène obtenu à partir d'un ou de plusieurs diacide(s) carboxylique(s) ou de leurs esters d'alkyle inférieur, (acide téréphtalique, acide isophtalique, acide naphtalènedicarboxylique-2,5, acide naphtalènedicarboxylique-2,6, acide naphtalènedicarboxylique-2,7, acide succinique, acide sébacique, acide adipique, acide azélaïque, acide diphényldicarboxylique et acide hexahydrotéréphtalique) et d'un ou plusieurs diols ou polyols comme l'éthylèneglycol, le propanediol-1,3, le butanediol-1,4, le néopentylglycol et le cyclohexanediméthanol-1,4, les polyoxyalkylèneglycol (polyoxyéthylèneglycol, polyoxypropylèneglycol on leurs copolymères statistiques ou séquencés). Lorsqu'on fait appel à des copolymères, ils doivent présenter un taux suffisant du ou des composant(s) monomère(s) conférant la cristallinité. On fait appel de préférence aux homopolyesters et aux copolyesters dérivés de l'acide téréphtalique. Dans le cas des copolyesters, ces derniers comportent de préférence un taux de motifs téréphtalates représentant au moins 80 % en moles des motifs diacides et plus préférentiellement au moins 90 %. Les polyesters et copolyesters dérivés de l'éthylèneglycol et du butanediol-1,4 constituent une classe préférée de polymères utilisés pour la réalisation de la couche support (A). Avantageusement, le polyester est un polytéréphtalate d'éthylèneglycol dont la viscosité intrinsèque mesurée à 25°C dans l'o-chlorophénol est comprise entre 0,6 et 0,75 dl/g.

Le matériau polymère à base de copolyester sulfoné utilisé pour la formation de la couche de primaire d'adhérence (B) peut être constitué soit par une copolyester sulfoné seul, soit par mélange d'un tel copolyester avec un ou plusieurs polyesters ou copolyesters non sulfonés tels que définis ci-après.

Comme copolyesters à groupes oxysulfonyles utilisé pour la formation de la couche (B), on fait appel à des copolyesters présentant une pluralité de groupes de formule générale :

$(-SO_3)_nM$ (I)

dans laquelle :

- n est égal à 1 ou 2
- M représente un atome d'hydrogène, un métal alcalin (sodium ou potassium par exemple), un métal alcalino-terreux (calcium, barium), un cation ammonium, un cation ammonium quaternaire.

Les copolyesters à groupes oxysulfonyles sont des produits connus ; de tels copolyesters ont été décrits notamment dans les brevets française 1.401.581 et 1.602.002 déjà cités. Ces copolyesters peuvent être obtenus par polycondensation d'au moins un ou plusieurs acides dicarboxyliques aromatiques avec au moins un ou plusieurs diols aliphatiques et au moins un composé difonctionnel comportant au moins un groupe oxysulfonyle. Les composés difonctionnels à groupe oxysulfonyle peuvent être des diacides carboxyliques ou des diols tels que ceux cités dans le brevet français 1.602.002 ou le brevet américain n° 3.779.993. De préférence les groupes oxysulfonyles sont liés à un radical aromatique.

Parmi les composés difonctionnels à groupes oxysulfonyles on utilise plus préférentiellement des acides aromatiques de formule générale :

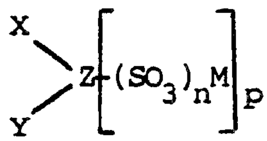

(II)

dans laquelle :

- M et n ont la signification déjà donnée ;
- Z est un radical aromatique polyvalent ;
- X et Y sont des radicaux hydroxycarbonyle ou dérivés : esters d'alcools aliphatiques inférieur ou halogénures d'acides (chlorure, bromure) ;
- p est un nombre entier égal à 1 ou 2.

Dans la formule (II), Z représente plus spécifiquement un radical phényle ou une combinaison de 2 ou plus de 2 radicaux phényles ortho ou péricondensés ou de deux ou plusieurs groupes phényles liés entre eux par des groupes inertes tels que des radicaux alcoylènes (méthylène, éthylène, propylène par exemple), alcoylidènes (propylidène) ou des groupes éther, cétone, sulfone.

Comme exemples spécifiques d'acides dicarboxyliques à groupes oxysulfonyles, on peut citer les acides hydroxysulfonyltéréphtalique ; hydroxysulfonylisophtaliques (en particulier l'acide sulfo-5 isophtalique); hydroxysulfonylorthophtaliques; hydroxysulfonyl-4 naphtalènedicarboxylique-2,7; hydroxysulfonyldiphényldicarboxylique-4,4'; les hydroxysulfonyl di-hydroxycarbonyl-4,4' diphénylsulfones; les hydroxysulfonyldihydroxycarbonyl-4,4' diphénylméthanes; l'acide (hydroxysulfonylphénoxy)-5 isophtalique, l'acide (hydroxysulfonylpropoxy)-5 isophtalique. Les copolyesters sulfonés dérivés des acides hydroxysulfonylisophtaliques conviennent tout particulièrement bien à la préparation des films composites selon l'invention.

Les acides dicarboxyliques non sulfonés qui peuvent être associés à l'acide téréphtalique pour préparer les copolyesters à groupes oxysulfonyles sont ceux habituellement utilisés pour l'obtention de polyesters. On peut citer à ce titre les acides téréphtalique; isophtalique; phtalique; naphtalènedicarboxylique-2,5; naphtalènedicarboxylique-2,6; la dihydroxycarbonyl-4,4' diphénylsulfone; le dihydroxycarbonyl-4,4' diphényléther; les acides alcanedioïques comportant de 4 à 16 atomes de carbone tels que les acides adipique, succinique, sébacique. Ces acides peuvent être utilisé seuls ou en mélange entre eux. On fait appel, de préférence à l'acide isophtalique.

Lorsque les copolyesters à groupes oxysulfonyles comportent dans leur structure des motifs dérivés d'acides alcane-dicarboxyliques ces motifs représentent de 5 à 30 % en mole du total des acides dicarboxyliques non sulfonés. Dans ce cas des motifs isophtalates peuvent également être présent mais il est préférable que leur teneur ne dépasse pas 10 % en mole du total des acides dicarboxyliques non sulfonés.

Des copolyesters à groupes oxysulfonyles qui conviennent tout particulièrement bien à la mise en oeuvre de la présente invention sont ceux qui comportent un nombre de motifs téréphtalate représentant au moins 70 % du total des motifs diacides non sulfonés, de 5 à 30 % de motifs diacides aliphatiques en $C_4$ - $C_{16}$ de 0 à 10 % de motifs isophtalates, de 3 à 20 % du total des motifs récurrents dérivés des acides carboxyliques, de motifs acides dicarboxyliques à groupes sulfoniques et au plus 10 % en poids par rapport au copolyester de diéthylèneglycol ou de ses oligomères supérieurs tels que définis plus haut.

Parmi les diols utilisables pour préparer les copolyesters à groupes oxysulfonyles, on peut citer l'éthylèneglycol, le propylèneglycol, le butanediol-1,3, le butanediol-1,4, le diméthyl-2,2 propanediol-1,3, le pentanediol-1,5, l'hexanediol-1,6, le cyclohexanediméthanol, le néopentylglycol, le diétylèneglycol, les tri-, tetra-, penta- et hexaéthylèneglycol. L'éthylèneglycol et ses oligomères conviennent tout particulièrement bien. On peut les utiliser seuls ou en mélange entre eux et/ou avec d'autres diols. Les mélanges d'éthylèneglycol et de ses oligomères de poids moléculaire inférieur à 600 sont préférés. Dans ce dernier cas la teneur en oligomères de l'éthylèneglycol exprimée, en pourcentage pondéral du polyester sulfoné est de préférence au moins égale à 2 % et au plus égale à 30 %. Une proportion comprise entre 5 et 25 % en poids convient bien.

La teneur des copolyesters sulfonés en motifs récurrents comportant des groupes oxysulfonyles exprimée par rapport au nombre total de motifs récurrents de même nature (diacide ou diol) est comprise entre 2 et 20 % et de préférence entre 3 et 10 %. Ainsi lorsqu'on fait appel à un acide dicarboxylique à groupes oxysulfonyles, le nombre de motifs récurrents dérivés de ce dernier représente de 2 à 20 % du nombre total des motifs récurrents dérivés des différents acides dicarboxyliques.

Parmi les copolyesters à groupes oxysulfonyles, on fait appel préférentiellement à ceux comportant dans leur chaîne une pluralité de motifs téréphtalates, oxysulfonyl-5 isophtalates, éventuellement isophtalates et une pluralité de motifs dérivés de l'éthylèneglycol et/ou de ses oligomères. On a recours avantageusement à des copolyesters dans lesquels le nombre de motifs récurrents oxysulfonyl-5 isophtalates représentent de 2 à 20 % du nombre total des motifs dérivés des acides dicarboxyliques. Lorsque les copolyesters comportent à la fois des motifs téréphtalates et isophtalates, ces derniers représentent de préférence 70 % au plus du total téréphtalate/isophtalate. Un nombre de motifs isophtalates compris entre 5 et 60 % de ce total convient bien.

Les copolyesters sulfonés décrits précédemment peuvent être obtenus par les procédés connus habituels. Ainsi il est possible de faire réagir dans un premier temps le diol ou les diols avec un ester méthylique du ou des acides carboxyliques, l'un ou l'autre groupe de réactifs comportant le composé difonctionnel à groupe(s) oxysulfonyle(s), pour former par transestérification, en présence des catalyseurs habituels, les esters des diols correspondants puis, dans un deuxième temps, de réaliser la polycondensation de façon connue. Selon une autre méthode on peut préparer deux prépolycondensats dont l'un comprend les motifs récurrents à groupes oxysulfonyles et les faire réagir en présence des catalyseurs usuels jusqu'à obtention d'un copolyester de poids moléculaire plus élevé. Le copolyester à groupes oxysulfonyles peut être un copolyester à blocs ou un copolyester statistique.

Dans la préparation des films composites selon l'invention, il peut se révéler avantageux de faire appel à un mélange d'un copolyester sulfoné tels que ceux décrits précédemment avec un ou plusieurs polyesters ou copolyesters non sulfonés. L'emploi de tels mélanges peut permettre de faire varier les propriétés d'adhérence de la couche primaire. Par ailleurs, l'association d'un ou plusieurs polyesters ou copolyesters non sulfonés peut s'avérer avantageuse, voire même nécessaire, lorsqu'on fait appel à des copolyesters sulfonés qui, en raison de leur composition (teneur relativement élevée en motifs récurrents sulfonés et/ou éventuellement présence de motifs récurrents dérivés d'autres molécules), présentent des propriétés rhéologiques et des températures de collage mal adaptées à la coextrusion.

De nombreux polyesters ou copolyesters filmogènes non sulfonés peuvent être associés aux copolyesters sulfonés pour former la couche primaire (B) par le procédé de l'invention. Une première classe de polymères non sulfonés est constituée par les polyesters et copolyesters cristallisables tels que ceux décrits pour la formation du film support (A). Les polytéréphtalates de diols et en particulier le polytéréphtalate d'éthylèneglycol ainsi que les copolyesters comportant au moins 80 % en moles de motifs téréphtalates d'éthylèneglycol conviennent tout spécialement bien. Dans ce cas, le polyester cristallisable peut être identique ou différent de celui constituant le support (A).

Les polyesters ou copolyesters non cristallisables constituent une autre classe de polymères qui peuvent être associés aux copolyesters sulfonés. Ces polyesters sont caractérisés par la présence dans leur chaîne d'une quantité suffisante de motifs récurrents leur conférant un caractère amorphe tels que, par exemple, les motifs phtalate, isophtalate, les motifs dérivés d'acides, alcanedioïques comportant au moins 4 atomes de carbone (adipate, succinate), les motifs dérivés de diols aliphatiques ramifiés comportant au moins 4 atomes de carbone (néopentylglycol), le diols cycloaliphatiques (cyclohexanediméthanol). A cet égard, on peut faire appel à des copolyesters amorphes présentant une pluralité de motifs tels que ceux précités et une quantité insuffisante de motifs téréphtalate d'éthylèneglycol pour les rendre cristallisables. On peut citer, à titre non limitatif, les copolyesters amorphes dérivés de l'acide téréphtatique, de l'éthylèneglycol et du cyclohexanediméthanol ou des copolyesters amorphes dérivés de l'acide téréphtalique, de l'acide isophtalique, de l'éthylèneglycol et du néopentylglycol.

On pourrait, sans sortir du cadre de la présente invention, associer deux ou plus de deux polyesters non sulfonés au copolyester sulfoné. Ainsi, on pourrait faire appel à un mélange ternaire constitué d'un polyester cristallisable (a), d'un copolyester sulfoné (b) et d'un polyester amorphe (c) non cristallisable.

Lorsqu'on utilise un mélange d'un copolyester sulfoné avec un polyester cristallisable et/ou un polyester amorphe non cristallisable, la teneur en copolyester sulfoné du mélange dépend dans une large mesure des caractéristiques du copolyester sulfoné (teneur en motifs récurrents à groupes oxysulfonyles ; propriétés rhéologiques ; température de collage). Elle est en général choisie de façon à obtenir à la fois une bonne adhérence du primaire au support et des propriétés rhéologiques et/ou une température de collage permettant l'obtention aisée d'un film composite par coextrusion. La proportion de polyester non sulfoné ajouté au copolyester sulfoné est de préférence choisie pour que la teneur du mélange obtenu en motifs récurrents à groupes oxysulfonyles exprimée par rapport au nombre total de motifs récurrents de même nature soit de préférence comprise entre environ 2 % et environ 10 % de façon à assurer à ce mélange de bonnes propriétés d'adhérence. Le cas échéant, la teneur en polyester non sulfoné pourra être choisie en outre de façon à conférer au mélange obtenue une température de collage supérieure à 100 °C et/ou des propriétés rhéologiques aussi proches que possible de celle du polyester constituant la couche support (A). En général lorsqu'on met en oeuvre un polyester cristallisable (a) ou un polyester amorphe non cristallisable (c) la proportion de (a) ou de (c) dans le mélange avec le copolyester sulfoné (b) représente

de préférence de 20 à 80 % en poids du total et plus préférentiellement encore de 40 à 60 % en poids du mélange. Dans le cas d'un mélange ternaire comprenant à la fois des polyesters cristallisables (a), des copolyesters sulfonés (b) et des polyesters amorphes non cristallisables (c), les proportions pondérales de (a), (b) et (c) dans le mélange sont avantageusement comprises dans les intervalles suivants :

(a) de 30 à 65 % du mélange ;
(b) de 15 à 60 % du mélange ;
(c) de 10 à 55 % du mélange.

et, plus préférentiellement, dans les intervalles suivants :

(a) de 35 à 60 % du mélange ;
(b) de 20 à 55 % du mélange ;
(c) de 10 à 50 % du mélange.

La mise en oeuvre de mélanges de copolyesters sulfonés et de polyesters non sulfonés se révèle en outre particulièrement avantageuse lorsqu'on désire communiquer à la couche (B) une certaine rugosité au moyen de charges. Il suffit alors de faire appel à un polyester (a) et/ou (c) contenant une proportion convenablement choisie de charge. On peut alors éviter de multiplier la gamme des copolyesters sulfonés à mettre à la disposition du fabricant de films.

On pourrait, sans sortir du cadre de la présente invention, faire appel pour la réalisation de la couche (B) à des mélanges d'au moins deux copolyesters sulfonés différant entre eux par la nature de leurs motifs récurrents et/ou leur teneur en motifs récurrents à groupes oxysulfonyles. Dans le cas où on met en oeuvre des mélanges de (b) et de polyesters (a) et/ou (c), on pourrait de même faire appel à des mélanges de deux ou plus de deux polyesters (a), ou de deux ou plus de deux polyesters (c).

Les couches (A) et/ou (B) peuvent contenir de fines particules destinées à modifier la rugosité de la surface de la couche qui les contient en leur conférant de bonnes propriétés de glissant.

Les charges présentes peuvent correspondre à de fines particules introduites dans la composition polymérique et/ou à des particules provenant de résidus catalytiques ou d'adjuvants de précipitation. Préférentiellement la rugosité est apportée par introduction de fines particules inertes dans la composition polymérique.

Les quantités de particules présentes sont telles que dans l'ensemble de la couche il y ait de 0,05 à 1 % et préférentiellement de 0,02 à 0,5 % en poids de particules. Quant au diamètre médian en volume de ces particules il est habituellement compris entre 0,1 et 5 microns et préférentiellement entre 0,2 et 3 microns.

La nature des particules inertes ajoutées peut être très variée : il peut s'agir de particules minérales (oxydes ou sels des éléments des groupes II, III et IV de la classification périodique des éléments), ou encore de particules polymériques. A titre illustratif, on peut citer parmi les charges utilisables : la silice, les silicoaluminates, le carbonate de calcium, MgO, $Al_2O_3$, $BaSO_4$, $TiO_2$. On peut évidemment faire appel à un mélange de plusieurs charges.

Lorsque la couche (B) est constituée par un mélange de polyesters (b) et (a) et/ou (c) et contient des particules à l'état finement divisé, celles-ci peuvent être amenées par l'un quelconque ou plusieurs des polyesters constituants du mélange. Toutefois, et cela constitue un avantage de la présente invention, il est préférable en pratique que les charges soient apportées par le polyester non sulfoné. En effet, il suffit de faire varier la quantité du composant a) et ou c) chargé dans le mélange et/ou la teneur en charge de a) et/ou c) pour obtenir des couches (B) présentant des topographies variées, sans avoir recours à une gamme étendue de composants b) chargés.

Selon une variante de la présente invention les couches (A) et/ou (B) peuvent contenir en outre des additifs divers, utilisés habituellement dans le domaine de l'industrie du film, tels que, par exemple, des stabilisants thermiques permettant d'assurer le recyclage du film.

Conformément à la présente invention, la (ou les) couche (B) est mise en place sur la couche support (A) par coextrusion. A cette fin, on alimente dans une première filière un polyester cristallisable conduisant à un film amorphe devenant cristallin ou semi-cristallin après avoir été soumis à un traitement d'étirage, puis à un traitement de thermofixation, alors que l'on extrude simultanément, par au moins une deuxième filière disposée parallèlement à la première et à sa proximité immédiate, le copolyester sulfoné ou, le cas échéant, un mélange de copolyester sulfoné et d'un polyester non sulfoné. Ce dernier peut être obtenu par toute technique connue de mélangeage et homogénéisation en un stade ou en plusieurs stades. Il peut être préparé directement juste avant son extrusion par fusion de ses composants à température élevée, ou peut avoir été préalablement préparé, extrudé et conditionné en granulés et remis en fusion après dilution éventuelle avec des granulés de polyester cristallin, semi-cristallin ou cristallisable. Les conditions de préparation et d'extrusion du mélange binaire sont choisies de façon à ne pas provoquer une évolution de ce mélange vers la formation de polymères blocs, voire même statistiques, telle que les propriétés

spécifiques à chaque constituant du mélange seraient modifiées profondément ou disparaitraient (par exemple la cristallinité). En particulier, le temps de séjour du mélange dans l'extrudeuse assurant le mélangeage des composants et l'extrusion est maintenu suffisamment court pour ne pas provoquer de modification profonde des polymères.

Les conditions d'étirage du film composite extrudé sont celles habituellement mises en oeuvre dans la fabrication des films polyesters. Ainsi, on peut procéder à un monoétirage ou à un biétirage effectué successivement ou simultanément dans deux directions en général orthogonales ou encore de séquences d'au moins 3 étirages où la direction d'étirage est changée à chaque séquence. Par ailleurs, chaque étirage monodirectionnel peut lui-même être effectué en plusieurs étapes. On pourra ainsi associer des séquences d'étirage comme par exemple deux traitements successifs de biétirage, chaque étirage pouvant être effectué en plusieurs phases.

De préférence, le film composite est soumis à un biétirage dans deux directions perpendiculaires. On peut par exemple procéder d'abord à un étirage dans la direction de déplacement du film (étirage longitudinal) puis à un étirage selon une direction perpendiculaire (étirage transversal) ou inversement. En général l'étirage longitudinal est effectué à un taux de 3 à 5 (c'est-à-dire que la longueur du film étiré représente de 3 à 5 fois la longueur du film amorphe) et à une température de 80 à 100 °C et l'étirage transversal est effectué avec un taux de 3 à 5 à une température de 90 à 120 °C.

L'étirage peut également être effectué de manière simultanée, c'est-à-dire simultanément dans le sens longitudinal et dans le sens transversal, par exemple avec un taux de 3 à 5 et à une température de 80 à 100 °C.

Selon le choix des conditions d'étirage il est possible de générer des topographies particulières de surface telles que la présence de cavités entourant une protubérance. Cette possibilité de générer des topographies particulières dépend en outre du choix du polymère et de ses adjuvants.

Le film composite résultant de la coextrusiuon et destiné à l'enduction par un latex aqueux de PVDC est un film mince d'apaisseur inférieure à 50 micromètres et de préférence comprise entre 5 et 40 micromètres. Il peut comporter une seule couche (B) ou deux couches (B) (une couche B sur chaque face de la couche support A). Dans ce cas les couches (B) peuvent être identiques ou différentes. Les couches (B) peuvent alors se différencier l'une de l'autre par la nature des polyesters sulfonés et/ou la présence ou l'absence de charges, et/ou par le taux de charge et/ou bien encore par leur épaisseur. Lorsque le film composite coextrudé support ne comporte qu'une couche (B), l'autre face de la couche (A) peut comporter une couche (D) différente des couches (A) et (B). La couche (D) peut se distinguer de la couche (A) par la nature du polyester qui la constitue et/ou par la présence de charges dans l'une ou l'autre couche et/ou par la nature et/ou la granulométrie et/ou le taux de ces charges. On dispose alors d'un moyen commode de modifier les propriétés de surface (topographie) de la face du film composite extrudé opposée à celle qui porte la couche (B). On peut alors en faire varier la rugosité, le coefficient de frottement, la résistance à l'abrasion en fonction de l'utilisation finale des films.

Le revêtement de PVDC déposé sur la ou les couches de primaire d'adhérence (B) du film composite support coextrudé est constitué par un polymére ou copolymère filmogène du chlorure de vinylidène du type de ceux utilisés habituellement pour l'enduction de films polyester. Ainsi, on fait appel à des polymères comportant au moins 80 % en moles d'unités récurrentes chlorure de vinylidène et de préférence au moins 85 %. Les copolymères comportant de 85 à 95 % de motifs chlorure de vinylidène et de 15 à 5 % de motifs dérivés d'un ou plusieurs monomères éthyléniques conviennent particulièrement bien. On fait appel, de préférence, à des copolymères du chlorure de vinylidène avec des monomères à insaturation éthylénique comme les monomères acryliques tels que les acides acrylique ou méthacrylique ; les acrylates ou méthacrylates d'alkyle (acrylates et méthacrylates de méthyle ou d'éthyle) et l'acrylonitrile conviennent particulièrement bien à ce titre.

On peut encore faire appel à des comonomères tels que l'acide crotonique et les crotonates d'alkyles d'alkyles inférieurs (ayant de 1 à 4 atomes de carbone), les acides maléïque, fumarique, itaconique et leurs esters, les esters vinyliques et notamment l'acétate de vinyle. D'autres exemples de monomères éthyléniques utilisables avec le chlorure de vinylidène sont cités dans le brevet française n° 1.255.353.

Les latex aqueux de PVDC utilisés dans le procédé de la présente invention sont des émulsions ou dispersions obtenues par les procédés habituels de polymérisation en émulsion en milieu aqueux. Un tel procédé a été décrit notamment dans le brevet français n° 1.254.025. La teneur du latex en matière solide est en général comprise entre 10 et 50 % en poids. Il peut contenir de 0,01 à 5 % en poids par rapport à la matière solide d'un agent destiné à améliorer le pouvoir glissant du revêtement obtenu. A ce titre, on peut utiliser des cires telles que la cire de carnauba, la cire de spermacéti, la cire de palmier, l'huile de ricin hydrogénée ou des esters d'acides gras à forte condensation en carbone comme le stéarate de benzyle, le distéarate de pentaérythritol. Les latex de PVDC peuvent contenir d'autres additifs bien connus de l'homme

de l'art, par exemples, des pigments, les colorants, des charges, des agents antistatiques ou des stabilisants.

L'enduction du film composite support coextrudé au moyen du latex aqueux est réalisée par les procédés connus tels que ceux décrits par exemple par G.L. BOOTH dans Modern Plastics - 1958 - n° 9 - pages 91 et suivantes et n° 10 - pages 90 et suivantes.

L'épaisseur de la couche de revêtement de PVDC varie en fonction des propriétés désirées pour ce revêtement et notamment en fonction de l'importance de l'effet barrière vis-à-vis des gaz et de la vapeur d'eau que l'on désire communiquer au film revêtu. En général, l'épaisseur du revêtement en PVDC est comprise dans un intervalle d'environ 0,05 à environ 10 micromètres et de préférence d'environ 0,1 à environ 5 micromètres. Pour atteindre de telles épaisseurs on dépose en général une quantité de matière sèche comprise entre environ 0,1 g/m$^2$ et environ 6 g/m$^2$. Lorsque le film support coextrudé comporte sur chaque face une couche (B) de revêtement primaire d'adhérence, on peut procéder à l'enduction d'une seule des couches (B) ou à l'enduction des deux couches (B) à l'aide du latex de PVDC.

Le film polyester composite portant l'enduit de PVDC est séché dans les conditions usuelles de température pour provoquer le départ de l'eau, la coalescence des particules de polymères sous forme d'un film continu et la cristallisation du polymère.

Le procédé selon l'invention permet d'obtenir des films orientés en polyester à revêtement PVDC présentant une adhérence particulièrement élevée dudit revêtement au support, bien adaptés à l'utilisation dans le domaine de l'emballage. La présente invention a précisément pour deuxième objet de tels films composites.

Plus particulièrement un deuxième objet de la présente invention réside dans des films polyester composites orientés constitués par un film support (A) d'un polyester cistallin ou semi-cristallin comportant sur au moins une de ses faces une couche contigüe d'un revêtement primaire d'adhérence (B) et une couche d'un revêtement de PVDC (C) déposée sur ladite couche (B) caractérisé en ce que la couche (B) de primaire d'adhérence est constituée par au moins un copolyester comportant une pluralité de motifs récurrents à groupes oxysulfonyles et a été formée par coextrusion.

Les exemples suivants illustrent l'invention et montrent comment elle peut être mise en pratique. Dans ces exemples, les polyesters cristallisables, cristallins ou semi-cristallins sont désignés par a), les copolyesters sulfonés par b) et le polyesters amorphes non cristallisables par c). On a fait appel aux polymères suivants :

1°) Polyesters cristallisables (a)

Référence (a1)

Il s'agit d'un polytéréphtalate d'éthylèneglycol contenant 1,5 % en mole de diéthylèneglycol et présentant un indice de viscosité de 740 mesurée à 25°C dans l'orthochlorophénol.

Référence (a2)

Il s'agit d'un polyester (a1) contenant 0,35 % en poids de kaolinite présentant une dimension particulaire moyenne de 1 micromètre.

2°) Polyesters sulfonés (b)

Référence (b1)

Ce copolyester a été préparé de la façon suivante :

Selon les procédés connus on prépare tout d'abord un prépolycondensat par réaction entre l'acide isophtalique, l'acide sulfo-5 isophtalique et l'éthylèneglycol en présence d'acétate de sodium utilisé comme catalyseur ; l'estérification est effectuée sous pression atmosphérique jusqu'à 220°C puis prépolymérisation jusqu'à 240°C.

On prépare également un autre prépolycondensat à partir de téréphtalate de diméthyle et d'éthylène

glycol en présence d'acétate de manganèse ; l'interéchange est poursuivi sous pression atmosphérique jusqu'à 225 °C. Après addition d'un stabilisant phosphoré et de trioxyde d'antimoine ce prépolycondensat est mélangé avec le prépolycondensat décrit dans le paragraphe précédent ; le mélange est chauffé jusqu'à 275 ° la pression étant progressivement réduite jusqu'à 0,5 torr.

Le copolyester obtenu est ensuite coulé et granulé. Il présente les caractéristiques suivantes :

. teneur en acide isophtalique dans le mélange acide téréphtalique (AT)/acide isophtalique (AI) moles % : 60.
. taux d'acide sulfo-5 isophtalique (ASI) en moles pour 100 moles de diacides aromatiques non sulfonés (AT / AI) : 14 %
. teneur pondérale en diéthylèneglycol (DEG) : 14 %

Référence (b2)

Il s'agit d'un copolyester présentant la composition suivante :

- ASI % en moles : 3,5
- AT % en moles : 85
- AI % en moles : 15
- DEG % en poids : 15

Référence (b3)

Copolyester répondant à la composition suivante :

- ASI % en moles : 3,5
- AT % en moles : 85
- AI % en moles : 15
- DEG % en poids : 3
- cyclohexanediméthanol % en moles : 7

Référence (b4)

Copolyester répondant à la composition suivante :

- ASI % en moles : 14
- AT % en moles : 80
- AI % en moles : 20
- DEG % en poids : 14

Référence (b5)

- ASI % en moles : 3,5
- AT % en moles : 95
- AI % en moles : 5
- DEG % en poids : 1,7

3 °) Polyester non sulfoné amorphe (c)

Référence (c1)

On utilise un copolyester vendu sous la marque commerciale DYNAPOL L 206 par la Société DYNAMIT NOBEL, du type AT/AI/éthylèneglycol/néopentylglycol.

Référence (c2)

Il s'agit d'un copolyester vendu sous la marque commerciale KODAR PETG 6763 par la Société KODAK, du type AT/éthylèneglycol/cyclohexanediméthanol.

4°) Latex PVDC (L)

Référence (L1)

Il s'agit d'un latex de marque commerciale IXAN PA 204 de SOLVAY, contenant 43 % en poids de matières solides et 0,3 % en poids plar rapport à l'extrait sec d'une charge de silice de marque commerciale "SYLOID 72".

Référence (L2)

Il s'agit du latex (L1) dilué pour abaisser son taux de matières solides à 35 % en poids et contenant pour 100 g d'extrait sec et 0,3 g de SYLOID 72.

Référence (L3)

Il s'agit du latex L1 dilué pour abaisser son taux de matières solides à 30 % en poids et contenant pour 100 g d'extrait sec 0,3 % de SYLOID 72.

On a préparé une série de films composites coextrudés supports (F) à partir des polyesters b), a) et/ou c), en opérant de la façon suivante : on coextrude un polyester cristallisable (a) et un copolyester sulfoné (b) ou un mélange de (b) et de (a) ou d'un copolyester amorphe non cristallisable (c). La ligne principale d'extrusion de la couche (A) travaille à 275°C et la ligne satellite d'extrusion de la couche (B) à une température inférieure à 275°C. Avant extrusion, les copolyesters sulfonés (b) sont étuvés sous air déshydraté, puis conservés et alimentés sous atmosphère d'un gaz inerte, dans l'extrudeuxse à vis de la ligne satellite d'extrusion.

Lorsqu'on fait appel à un mélange de b) et de a), ce mélange est obtenu comme suit : le polyester a) est séché à 160°C pour éliminer toute trace d'humidité et le copolyester sulfoné est étuvé sous air déshydraté. Les deux composants du mélange, sous forme particulaire, sont conservés et alimentés dans les proportions choisies, sous atmosphère d'un gaz inerte, dans l'extrudeuse à vis de la ligne satellite.

Les films polyesters orientés composites suivants ont été préparés :

| FILMS | Couche A | | Couche B | | | | | | |
|---|---|---|---|---|---|---|---|---|---|
| | Réf. polyester | Epaisseur en µm | Epaisseur en µm | Copolyester sulfoné | | Polyester cristallisable | | Polyester amorphe | |
| | | | | Réf. | % en poids (1) | Réf. | % en poids (1) | Réf. | % en poids (1) |
| F1 | (a1) | 12 | 1 | (b1) | 25 | - | - | (c2) | 75 |
| F2 | (a1) | " | " | (b1) | 50 | - | - | " | 50 |
| F3 | (a1) | " | " | (b2) | 100 | - | - | - | - |
| F4 | (a1) | " | " | (b3) | 100 | - | - | - | - |
| F5 | (a1) | " | " | (b4) | 25 | (a2) | 75 | - | - |
| F6 | (a1) | " | " | (b2) | 100 | - | - | - | - |

(1) dans le mélange

Exemple 1

On fait passer le film F1 de 900 mm de largeur dans une machine pilote d'enduction à la vitesse de 20

m/mn pour y déposer sur une de ses faces une couche du latex L1, à raison de 4 g d'extrait sec par m$^2$. On sèche l'enduit ainsi obtenu par passage du film dans un séchoir-tunnel à contre-courant d'un flux d'air chaud. Le film enduit sec F'1 ains obtenu est refroidi et bobiné. La bobine est maintenue à la température usuelle et pendant un temps suffisant pour provoquer la cristallisation du PVDC. Lorsque la cristallisation est achevée le film F'1 est soumis à un test destiné à mesurer l'adhérence du revêtement PVDC au support polyester. Pour cela on mesure la force nécessaire pour provoquer la décohésion de 2 échantillons de 38 mm de large du film F'1 thermoscellé l'un sur l'autre, face PVDC contre face PVDC, dans une machine de thermoscellage, par serrage pendant 1 seconde sous une pression de 1,4 kg/cm$^2$ des échantillons entre les mâchoires de ladite machine portées à 140°C. Les éprouvettes ainsi obtenues sont maintenues à 23°C dans une atmosphère ayant un taux d'humidité relative (HR) égal à 50. Après 3 jours et 7 jours dans ces conditions on exerce une traction sur chaque échantillon constituant les éprouvettes et on mesure dynamomètriquement la force de décohésion de la soudure, exprimée en newton par cm. Les résultats suivants ont été obtenus :

| Durée du conditionnement | Force de décohésion |
|---|---|
| 3 j. | 0,8 N/cm |
| 7 j. | 1 N/cm |

Exemple 2

On a préparé un film F'2 à partir du film F2 en opérant comme à l'exemple 1 et mesuré, dans les mêmes conditions, la force de décohésion d'éprouvettes thermoscellés obtenues comme précèdemment. Les résultats suivants ont été obtenus :

| Durée du conditionnement | Force de décohésion |
|---|---|
| 3 j. | 0,8 N/cm |
| 7 j. | 0,7 N/cm |

Exemples 3 à 5

On a préparé une série de films enduits PVDC F'3, F'4 et F'5 par passage des films coextrudés F3, F4 et F5 de 900 mm de large, à la vitesse de 150m/mn dans une machine d'enduction à lame d'air dans laquelle on procède au dépôt de 2 g/m$^2$ de produit solide du latex L2.

On a réalisé ensuite des éprouvettes des films enduits F'3, F'4 et F'5 comme décrit à l'exemple 1. Les éprouvettes ont été ensuite maintenues 3 jours à 38°C dans une atmosphère de HR égale à 90 %. La mesure de la forece de décohésion a fourni les résultats suivants :

| Films | Force de décohésion |
| --- | --- |
| F'3 | 0,2 N/cm |
| F'4. | 0,2 N/cm |
| F'5. | 0,5 N/cm |

A titre comparatif on a préparé deux films polyester à revêtement PVDC FC1 et FC2 par dépôt sur deux films polyester ayant subi un traitement corona du latex L2 à raison de 2 g/m² de matière solide. Le film polyester support de FC1 ne comportait pas de primaire d'adhérence et le film support de FC2 comportait un revêtement de polyuréthane de marque commerciale ADCOTE 376. Des éprouvettes des films FC1 et FC2 ont été réalisées comme décrit ci-avant et conditionnées dans les mêmes conditions puis la force de décohésiuon a été mesurée. On a obtenu les résultats suivants :

| Films | Force de décohésion |
| --- | --- |
| FC1 | 0,2 N/cm |
| FC2. | 0,2 N/cm |

Exemples 6 et 7

On a préparé deux films enduits de PVDC F"5 et F'6 par passage des films F5 et F6, à une vitesse de 250 m/mn dans une machine d'enduction comportant un rouleau enducteur et une barre lisseuse en céramique dans laquelle on dépose, sur une face des films F5 et F6, le latex (L3) à raison de 2 g/m². Les films enduits sont ensuite traités comme à l'exemple 1.

A partir des films F"5 et F'6, on prépare des éprouvettes selon la méthode décrite à l'exemple 1. Ces éprouvettes sont soumises, sans conditionnement préalable, à une mesure de la force de décohésion. On a obtenu les résultats suivants :

| Films | Force de décohésion |
| --- | --- |
| F"5 | 0,82 N/cm |
| F'6. | 0,48 N/cm |

A titre comparatif, on a préparé un film polyester à revêtement PVDC (FC3) par dépôt du latex L3 à raison de 0,2 g/m$^2$ de matière solide sur un film de polyester (a2) de 12 micromètres d'épaisseur comportant une couche de primaire d'adhérence à base d'un polyuréthanne de marque commerciale ADCOTE 376 déposée après traitement corona du film polyester support. En opérant comme précédemment, on a mesuré la force de décohésion d'une éprouvette obtenue conformément au procédé déjà décrit. La force de rupture de la soudure s'est élevée à 0,43 N/cm

## Revendications

**1.** Procédé d'obtention de films polyester composites orientés constitués par un film support (A) d'un polyester cristallin ou semi-cristallin comportant, sur au moins une de ses faces, une couche contigüe d'un revêtement primaire d'adhérence (B) et une couche d'un revêtement de PVDC (C) déposée sur ladite couche (B) par enduction d'un latex aqueux caractérisé en ce que l'on procède à la coextrusion d'un polyester cristallisable (a) et d'un matériaux polymère à base d'un copolyester comportant une pluralité de motifs récurrents à groupes oxysulfonyles sous formes d'un film composite comprenant une couche (A) de polyester amorphe et au moins une couche (B), au refroidissement dudit film, à son étirage dans au moins une direction, à la thermofixation du film étiré puis à son enduction au moyen d'un latex aqueux de PVDC et enfin au séchage du revêtement ainsi obtenu, puis à la cristallisation du PVDC.

**2.** Procédé selon la revendication 1, caractérisé en ce que le polyester cristallisable utilisé pour former la couche (A) est un homopolyester ou un copolyester de l'acide téréphtalique comportant au moins 80 % en moles de motifs téréphtalates.

**3.** Procédé selon la revendication 2, caractérisé en ce que le polyester cristallisable utilisé pour former la couche (A) est le polytéréphtalate d'éthylèneglycol.

**4.** Procédé selon l'une quelconque des revendications 1 à 3, caractérisé en ce que le copolyester sulfoné utilisé comme constituant de la couche (B) présente une pluralité de groupes oxysulfonyles de formule générale :

$(-SO_3)_nM$ (I)

dans laquelle :
- n est égal à 1 ou 2
- M représente un atome d'hydrogène, un métal alcalin, un métal alcalino-terreux, un cation ammonium, un cation ammonium quaternaire.

**5.** Procédé selon l'une quelconque des revendications 1 à 4, caractérisé en ce que le copolyester sulfoné présente une pluralité de motifs dérivés de diacides aromatiques ou leurs dérivés de formule :

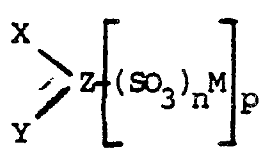

(II)

dans laquelle :
- n est égal à 1 ou 2.
- M représente un atome d'hydrogène, un métal alcalin, un métal alcalino-terreux, un cation ammonium, un cation ammonium quaternaire ;
- z est un radical aromatique polyvalent ;
- X et Y sont des radicaux hydroxycarbonyle ou dérivés : esters d'alcools aliphatiques inférieur ou halogénures d'acides (chlorure, bromure) ;
- p est un nombre entier égal à 1 ou 2.

6. Procédé selon l'une quelconque des revendications 1 à 5, caractérisé en ce que le copolyester sulfoné présente une pluralité de motifs dérivés d'un acide hydroxysulfonylisophtalique.

7. Procédé selon l'une quelconque des revendications 1 à 6, caractérisé en ce que le copolyester sulfoné présente en outre une pluralité de motifs dérivés de l'acide téréphtalique.

8. Procédé selon la revendication 7, caractérisé en ce que le copolyester sulfoné présente à la fois une pluralité de motifs dérivés de l'acide téréphtalique et une pluralité de motifs dérivés de l'acide isophtalique.

9. Procédé selon la revendication 8, caractérisé en ce que dans le copolyester sulfoné, le nombre de motifs dérivés de l'acide isophtalique représente jusqu'à 70 % du total des motifs téréphtalate/isophtalate.

10. Procédé selon l'une quelconque des revendications 1 à 9, caractérisé en ce que le copolyester sulfoné présente une pluralité de motifs dérivés de l'éthylèneglycol et/ou de ses oligomères de poids moléculaire inférieur à 600.

11. Procédé selon la revendication 10, caractérisé en ce que la teneur pondérale du copolyester sulfoné en motifs dérivés des oligomères de l'éthylèneglycol est comprise entre 2 et 30 %.

12. Procédé selon l'une quelconque des revendications 1 à 11, caractérisé en ce que le copolyester sulfoné a une teneur en motifs récurrents à groupes oxysulfonyles comprise dans un intervalle de 2 à 20 % du nombre total de motifs récurrents de même nature.

13. Procédé selon l'une quelconque des revendications 1 à 12, caractérisé en ce que le copolyester sulfoné est utilisé sous forme d'un mélange avec au moins un polyester ou un copolyester non sulfoné.

14. Procédé selon la revendication 13, caractérisé en ce que le polyester ou le copolyester non sulfoné est pris dans le groupe des polyesters cristallisables et des polyesters non cristallisables.

15. Procédé selon la revendication 14, caractérisé en ce que le polyester cristallisable est un homopolyester ou un copolyester dérivé de l'acide téréphtalique comportant au moins 80 % en moles de motifs téréphtalates.

16. Procédé selon la revendication 14, caractérisé en ce que le polyester non cristallisable est un copolyester dérivé de l'acide téréphtalique.

17. Procédé selon l'une quelconque des revendications 1 à 16, caractérisé en ce que la teneur pondérale du mélange polyester non sulfoné/copolyester sulfoné en ce dernier est calculée pour que le nombre de motifs récurrents à groupes oxysulfonyles présents dans le mélange représente de 2 à 10 % du nombre total des motifs récurrents de même nature présents dans le mélange.

18. Procédé selon l'une quelconque des revendications 1 à 17, caractérisé en ce que l'on utilise un mélange de polymères contenant de 20 à 80 % en poids de copolyester sulfoné et de 80 à 20 % en poids d'un copolyester non sulfoné.

19. Procédé selon l'une quelconque des revendications 1 à 18, caractérisé en ce que le latex aqueux utilisé pour l'enduction de la couche (B) est une émulsion ou une dispersion d'un polymère comportant au moins 80 % en moles de motifs chlorure de vinylidène.

20. Films polyester composites orientés complexes constitués par un film support (A) d'un polyester cristallin ou semi-cristallin comportant, sur au moins une de ses faces, une couche contigüe coextrudée d'un revêtement primaire d'adhérence (B) et une couche d'un revêtement de PVDC (C) déposée sur ladite couche (B), caractérisé en ce que cette dernière est constituée par au moins un copolyester comportant une pluralité de motifs récurrents à groupes oxysulfonyles selon l'une quelconque des revendications 1 à 12.

21. Film polyester composite orienté complexe selon la revendication 20, caractérisé en ce que la couche de primaire d'adhérence (B) est constituée par un mélange d'un copolyester sulfoné avec au moins un polyester ou copolyester non sulfoné.

Revendications pour l'Etat contractant suivant : ES

1. Procédé d'obtention de films polyester composites orientés constitués par un film support (A) d'un polyester cristallin ou semi-cristallin comportant, sur au moins une de ses faces, une couche contigüe d'un revêtement primaire d'adhérence (B) et une couche d'un revêtement de PVDC (C) déposée sur ladite couche (B) par enduction d'un latex aqueux caractérisé en ce que l'on procède à la coextrusion d'un polyester cristallisable (a) et d'un matériaux polymère à base d'un copolyester comportant une pluralité de motifs récurrents à groupes oxysulfonyles sous formes d'un film composite comprenant une couche (A) de polyester amorphe et au moins une couche (B), au refroidissement dudit film, à son étirage dans au moins une direction, à la thermofixation du film étiré puis à son enduction au moyen d'un latex aqueux de PVDC et enfin au séchage du revêtement ainsi obtenu, puis à la cristallisation du PVDC.

2. Procédé selon la revendication 1, caractérisé en ce que le polyester cristallisable utilisé pour former la couche (A) est un homopolyester ou un copolyester de l'acide téréphtalique comportant au moins 80 % en moles de motifs téréphtalates.

3. Procédé selon la revendication 2, caractérisé en ce que le polyester cristallisable utilisé pour former la couche (A) est le polytéréphtalate d'éthylèneglycol.

4. Procédé selon l'une quelconque des revendications 1 à 3, caractérisé en ce que le copolyester sulfoné utilisé comme constituant de la couche (B) présente une pluralité de groupes oxysulfonyles de formule générale :

$(-SO_3)_nM$ (I)

dans laquelle :
- n est égal à 1 ou 2
- M représente un atome d'hydrogène, un métal alcalin, un métal alcalino-terreux, un cation ammonium, un cation ammonium quaternaire.

5. Procédé selon l'une quelconque des revendications 1 à 4, caractérisé en ce que le copolyester sulfoné présente une pluralité de motifs dérivés de diacides aromatiques ou leurs dérivés de formule :

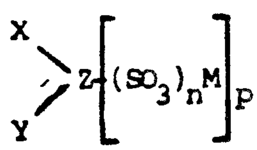

(II)

dans laquelle :
- n est égal à 1 ou 2 .
- M représente un atome d'hydrogène, un métal alcalin, un métal alcalino-terreux, un cation ammonium, un cation ammonium quaternaire ;
- Z est un radical aromatique polyvalent ;
- X et Y sont des radicaux hydroxycarbonyle ou dérivés : esters d'alcools aliphatiques inférieur ou halogénures d'acides (chlorure, bromure) ;
- p est un nombre entier égal à 1 ou 2.

6. Procédé selon l'une quelconque des revendications 1 à 5, caractérisé en ce que le copolyester sulfoné présente une pluralité de motifs dérivés d 'un acide hydroxysulfonylitsophalique.

7. Procédé selon l'une quelconque des revendications 1 à 6, caractérisé en ce que le copolyester sulfoné présente en outre une pluralité de motifs dérivés de l'acide téréphtalique.

8. Procédé selon la revendication 7, caractérisé en ce que le copolyester sulfoné présente à la fois une pluralité de motifs dérivés de l'acide téréphtalique et une pluralité de motifs dérivés de l'acide isophtalique.

9. Procédé selon la revendication 8, caractérisé en ce que dans le copolyester sulfoné, le nombre de motifs dérivés de l'acide isophtalique représente jusqu'à 70 % du total des motifs téréphtalate/isophalate.

10. Procédé selon l'une quelconque des revendications 1 à 9, caractérisé en ce que le copolyester sulfoné présente une pluralité de motifs dérivés de l'éthylèneglycol et/ou de ses oligomères de poids moléculaire inférieur à 600.

11. Procédé selon la revendication 10, caractérisé en ce que la teneur pondérale du copolyester sulfoné en motifs dérivés des oligomères de l'éthylèneglycol est comprise entre 2 et 30 %.

12. Procédé selon l'une quelconque des revendications 1 à 11, caractérisé en ce que le copolyester sulfoné a une teneur en motifs récurrents à groupes oxysulfonyles comprise dans un intervalle de 2 à 20 % du nombre total de motifs récurrents de même nature.

13. Procédé selon l'une quelconque des revendications 1 à 12, caractérisé en ce que le copolyester sulfoné est utilisé sous forme d'un mélange avec au moins un polyester ou un copolyester non sulfoné.

14. Procédé selon la revendication 13, caractérisé en ce que le polyester ou le copolyester non sulfoné est pris dans le groupe des polyesters cristallisables et des polyesters non cristallisables.

15. Procédé selon la revendication 14, caractérisé en ce que le polyester cristallisable est un homopolyester ou un copolyester dérivé de l'acide téréphtalique comportant au moins 80 % en moles de motifs téréphtalates.

16. Procédé selon la revendication 14, caractérisé en ce que le polyester non cristallisable est un copolyester dérivé de l'acide téréphtalique.

17. Procédé selon l'une quelconque des revendications 1 à 16, caractérisé en ce que la teneur pondérale du mélange polyester non sulfoné/copolyester sulfoné en ce dernier est calculée pour que le nombre de motifs récurrents à groupes oxysulfonyles présents dans le mélange représente de 2 à 10 % du nombre total des motifs récurrents de même nature présents dans le mélange.

18. Procédé selon l'une quelconque des revendications 1 à 17, caractérisé en ce que l'on utilise un mélange de polymères contenant de 20 à 80 % en poids de copolyester sulfoné et de 80 à 20 % en poids d'un copolyester non sulfoné.

19. Procédé selon l'une quelconque des revendications 1 à 18, caractérisé en ce que le latex aqueux utilisé pour l'enduction de la couche (B) est une émulsion ou une dispersion d'un polymère comportant au moins 80 % en moles de motifs chlorure de vinylidène.

**Claims**

1. Process for the production of oriented composite polyester films consisting of a crystalline or semicrystalline polyester support film (A) containing, on at least one of its surfaces, a contiguous layer of an adhesion primer coating (B) and a layer of a PVDC coating (C) deposited on the said layer (B) by coating with an aqueous latex, characterised in that a crystallisable polyester (a) and a polymeric material based on a copolyester containing a plurality of oxysulphonyl group-containing recurring units are coextruded in the form of a composite film containing a layer (A) of amorphous polyester and at least one layer (B), that said film is cooled, drawn in at least one direction, the drawn film is heat-set and then coated using an aqueous latex of PVDC and the coating thus obtained is finally dried, and the PVDC is then crystallised.

2. Process according to Claim 1, characterised in that the crystallisable polyester employed for forming layer (A) is a homopolyester or a copolyester of terephthalic acid containing at least 80 mol% of terephthalate units.

3. Process according to Claim 2, characterised in that the crystallisable polyester employed for forming layer (A) is ethylene glycol polyterephthalate.

4. Process according to any one of Claims 1 to 3, characterised in that the sulphonated copolyester employed as constituent of layer (B) has a plurality of oxysulphonyl groups of general formula:

$(-SO_3)_nM$ (1)

in which:
n is equal to 1 or 2 and
M represents a hydrogen atom, an alkali metal, an alkaline-earth metal, an ammonium cation or a quaternary ammonium cation.

5. Process according to any one of Claims 1 to 4, characterised in that the sulphonated copolyester has a plurality of units derived from aromatic diacids or their derivatives of formula:

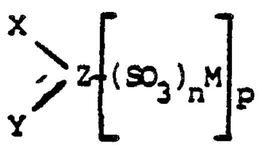

(II)

in which:
n is equal to 1 or 2,
M represents a hydrogen atom, an alkali metal, an alkaline-earth metal, an ammonium cation or a quaternary ammonium cation;
Z is a polyvalent aromatic radical;
X and Y are hydroxycarbonyl radicals or derivatives:
lower aliphatic alcohol esters or acid halides (chloride or bromide): and
p is an integer equal to 1 or 2.

6. Process according to any one of Claims 1 to 5, characterised in that the sulphonated copolyester has a plurality of units derived from a hydroxysulphonylisophthalic acid.

7. Process according to any one of Claims 1 to 6, characterised in that the sulphonated copolyester additionally has a plurality of units derived from terephthalic acid.

8. Process according to Claim 7, characterised in that the sulphonated copolyester has both a plurality of units derived from terephthalic acid and a plurality of units derived from isophthalic acid.

9. Process according to Claim 8, characterised in that in the sulphonated copolyester, the number of units derived from isophthalic acid represents up to 70% of the total of the terephthalate/isophthalate units.

10. Process according to any one of Claims 1 to 9, characterised in that the sulphonated copolyester has a plurality of units derived from ethylene glycol and/or its oligomers with a molecular weight of less than 600.

11. Process according to Claim 10, characterised in that the content by weight of units derived from ethylene glycol oligomers in the sulphonated copolyester is between 2 and 30%.

12. Process according to any one of Claims 1 to 11, characterised in that the sulphonated copolyester has a content of oxysulphonyl group-containing recurring units within a range from 2 to 20% of the total number of recurring units of the same nature.

13. Process according to one of Claims 1 to 12, characterised in that the sulphonated copolyester is employed in the form of a mixture with at least one non-sulphonated polyester or copolyester.

14. Process according to Claim 13, characterised in that the non-sulphonated polyester or copolyester is chosen from the group consisting of crystallisable polyesters and non-crystallisable polyesters.

15. Process according to Claim 14, characterised in that the crystallisable polyester is a homopolyester or a copolyester derived from terephthalic acid containing at least 80 mol% of terephthalate units.

16. Process according to Claim 14, characterised in that the non-crystallisable polyester is a copolyester derived from terephthalic acid.

17. Process according to any one of Claims 1 to 16, characterised in that the content by weight of the latter in the non-sulphonated polyester/sulphonated copolyester mixture is calculated so that the number of oxysulphonyl group-containing recurring units present in the mixture represents from 2 to 10% of the total number of recurring units of the same nature present in the mixture.

18. Process according to any one of Claims 1 to 17, characterised in that a mixture of polymers containing from 20 to 80% by weight of sulphonated copolyester and from 80 to 20% by weight of a non-sulphonated copolyester is employed.

19. Process according to any one of Claims 1 to 18, characterised in that the aqueous latex employed for coating layer (B) is an emulsion or a dispersion of a polymer containing at least 80 mol% of vinylidene chloride units.

20. Complex oriented composite polyester films consisting of a crystalline or semicrystalline polyester support film (A) containing, on at least one of its surfaces, a coextruded contiguous layer of an adhesion primer coating (B) and a layer of a PVDC coating (C) deposited on said layer (B), characterised in that the latter consists of at least one copolyester containing a plurality of oxysulphonyl group-containing recurring units according to any one of Claims 1 to 12.

21. Complex oriented composite polyester film according to Claim 20, characterised in that the adhesion primer layer (B) consists of a mixture of a sulphonated copolyester and at least one non-sulphonated polyester or copolyester.

Claims for the following Contracting State: ES

1. Process for the production of oriented composite polyester films consisting of a crystalline or semicrystalline polyester support film (A) containing, on at least one of its surfaces, a contiguous layer of an adhesion primer coating (B) and a layer of a PVDC coating (C) deposited on the said layer (B) by coating with an aqueous latex, characterised in that a crystallisable polyester (a) and a polymeric material based on a copolyester containing a plurality of oxysulphonyl group-containing recurring units are coextruded in the form of a composite film containing a layer (A) of amorphous polyester and at least one layer (B), that said film is cooled, drawn in at least one direction, the drawn film is heat-set and then coated using an aqueous latex of PVDC and the coating thus obtained is finally dried, and the PVDC is then crystallised.

2. Process according to Claim 1, characterised in that the crystallisable polyester employed for forming layer (A) is a homopolyester or a copolyester of terephthalic acid containing at least 80 mol% of terephthalate units.

3. Process according to Claim 2, characterised in that the crystallisable polyester employed for forming layer (A) is ethylene glycol polyterephthalate.

4. Process according to any one of Claims 1 to 3, characterised in that the sulphonated copolyester employed as constituent of layer (B) has a plurality of oxysulphonyl groups of general formula:

$(-SO_3)_nM$. (I)

in which:
n is equal to 1 or 2 and
M represents a hydrogen atom, an alkali metal, an alkaline-earth metal, an ammonium cation or a quaternary ammonium cation.

5. Process according to any one of Claims 1 to 4, characterised in that the sulphonated copolyester has a plurality of units derived from aromatic diacids or their derivatives of formula:

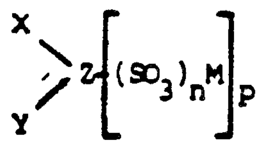

(II)

in which:
n is equal to 1 or 2,
M represents a hydrogen atom, an alkali metal, an alkaline-earth metal, an ammonium cation or a quaternary ammonium cation;
Z is a polyvalent aromatic radical;
X and Y are hydroxycarbonyl radicals or derivatives:
lower aliphatic alcohol esters or acid halides (chloride or bromide): and
p is an integer equal to 1 or 2.

6. Process according to any one of Claims 1 to 5, characterised in that the sulphonated copolyester has a plurality of units derived from a hydroxysulphonylisophthalic acid.

7. Process according to any one of Claims 1 to 6, characterised in that the sulphonated copolyester additionally has a plurality of units derived from terephthalic acid.

8. Process according to Claim 7, characterised in that the sulphonated copolyester has both a plurality of units derived from terephthalic acid and a plurality of units derived from isophthalic acid.

9. Process according to Claim 8, characterised in that the sulphonated copolyester, the number of units derived from isophthalic acid represents up to 70% of the total of the terephthalate/isophthalate units.

10. Process according to any one of Claims 1 to 9, characterised in that the sulphonated copolyester has a plurality of units derived from ethylene glycol and/or its oligomers with a molecular weight of less than 600.

11. Process according to Claim 10, characterised in that the content by weight of units derived from ethylene glycol oligomers in the sulphonated copolyester is between 2 and 30%.

12. Process according to any one of Claims 1 to 11, characterised in that the sulphonated copolyester has a content of oxysulphonyl group-containing recurring units within a range from 2 to 20% of the total number of recurring units of the same nature.

13. Process according to one of Claims 1 to 12, characterised in that the sulphonated copolyester is employed in the form of a mixture with at least one non-sulphonated polyester or copolyester.

14. Process according to Claim 13, characterised in that the non-sulphonated polyester or copolyester is chosen from the group consisting of crystallisable polyesters and non-crystallisable polyesters.

15. Process according to Claim 14, characterised in that the crystallisable polyester is a homopolyester or a copolyester derived from terephthalic acid containing at least 80 mol% of terephthalate units.

16. Process according to Claim 14, characterised in that the non-crystallisable polyester is a copolyester derived from terephthalic acid.

**17.** Process according to any one of Claims 1 to 16, characterised in that the content by weight of the latter in the non-sulphonated polyester/sulphonated copolyester mixture is calculated so that the number of oxysulphonyl group-containing recurring units present in the mixture represents from 2 to 10% of the total number of recurring units of the same nature present in the mixture.

**18.** Process according to any one of Claims 1 to 17, characterised in that a mixture of polymers containing from 20 to 80% by weight of sulphonated copolyester and from 80 to 20% by weight of a non-sulphonated copolyester is employed.

**19.** Process according to any one of Claims 1 to 18, characterised in that the aqueous latex employed for coating layer (B) is an emulsicn or a dispersion of a polymer containing at least 80 mol% of vinylidene chloride units.

## Ansprüche

**1.** Verfahren zur Herstellung von orientierten Polyester-Verbundfilmen, bestehend aus einem Trägerfilm (A) eines kristallinen oder halb-kristallinen Polyesters, der auf wenigstens einer seiner Seiten eine angrenzende Schicht eines Haftgrundierungsüberzugs (B) und eine Schicht eines PVDC-Überzugs (c) trägt, der auf der genannten Schicht (B) durch Beschichtung mit einem wäßrigen Latex abgelagert ist, dadurch **gekennzeichnet,** daß man die Coextrusion eines kristallisierbaren Polyesters (a) und eines Polymermaterials auf Basis eines Copolyesters durchführt, der eine Vielzahl von wiederkehrenden Einheiten mit Oxysulfonylgruppen trägt, in Form eines Verbundfilms, der eine Schicht (A) an amorphem Polyester (A) und mindestens eine Schicht (B) enthält, Abkühlen dieses Films, Verstrecken in wenigstens einer Richtung, Thermofixierung des verstreckten Films und dann Beschichten mittels eines wäßrigen PVDC-Latex und schließlich Trocknen des so erhaltenen Überzugs, dann Kristallisation des PVDC.

**2.** Verfahren gemäß Anspruch 1, dadurch gekennzeichnet, daß der kristallisierbare Polyester, der zur Bildung der Schicht (A) verwendet wird, ein Homopolyester oder ein Copolyester der Terephthalsäure ist mit wenigstens 80 Mol-% Terephthalat-Einheiten.

**3.** Verfahren gemäß Anspruch 2, dadurch gekennzeichnet, daß der kristallisierbare Polyester, der zur Bildung der Schicht (A) verwendet wird, das Polyethylen-glykol-terephthalat ist.

**4.** Verfahren gemäß einem der Ansprüche 1 bis 3, dadurch gekennzeichnet, daß der sulfonierte Copolyester, der als Bestandteil der Schicht (B) verwendet wird, eine Vielzahl von Oxysulfonylgruppen der allgemeinen Formel

$(-SO_3)_nM$ (I)

aufweist, worin:
n = 1 oder 2,
M ein Wasserstoffatom, ein Alkalimetall, ein Erdalkalimetall, ein Ammoniumkation, ein quaternäres Ammoniumkation bedeutet.

**5.** Verfahren gemäß einem der Ansprüche 1 bis 4, dadurch gekennzeichnet, daß der sulfonierte Copolyester eine Vielzahl von Einheiten, abgeleitet von aromatischen Disäuren oder deren Derivaten der Formel

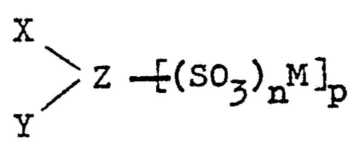

(II)

aufweist, worin:
n = 1 oder 2;
M ein Wasserstoffatom, ein Alkalimetall, ein Erdalkalimetall, ein Ammoniumkation, ein quaternäres

Ammoniumkation bedeutet;
Z ein mehrwertiger, aromatischer Rest ist;
X und Y Hydroxycarbonylreste oder Derivate: Ester von niederen, aliphatischen Alkoholen oder Säurehalogenide (Chlorid, Bromid) sind;
p eine ganze Zahl von 1 oder 2 ist.

**6.** Verfahren gemäß einem der Ansprüche 1 bis 5, dadurch gekennzeichnet, daß der sulfonierte Copolyester eine Vielzahl von Einheiten, abgeleitet von einer Hydroxysulfonylisophthalsäure, aufweist.

**7.** Verfahren gemäß einem der Ansprüche 1 bis 6, dadurch gekennzeichnet, daß der sulfonierte Copolyester außerdem eine Vielzahl von Einheiten, abgeleitet von der Terephthalsäure, aufweist.

**8.** Verfahren gemäß Anspruch 7, dadurch gekennzeichnet, daß der sulfonierte Copolyester gleichzeitig eine Vielzahl von Einheiten, abgeleitet von der Terephthalsäure, und eine Vielzahl von Einheiten, abgeleitet von der Isophthalsäure, aufweist.

**9.** Verfahren gemäß Anspruch 8, dadurch gekennzeichnet, daß in dem sulfonierten Copolyester die Zahl der Einheiten, abgeleitet von der Isophthalsäure, bis zu 70% der Gesamtheit der Einheiten Terephthalat/Isophthalat darstellt.

**10.** Verfahren gemäß einem der Ansprüche 1 bis 9, dadurch gekennzeichnet, daß der sulfonierte Copolyester eine Vielzahl von Einheiten, abgeleitet von Ethylenglykol und/oder seinen Oligomeren mit einem Molekulargewicht unter 600, aufweist.

**11.** Verfahren gemäß Anspruch 10, dadurch gekennzeichnet, daß der Gewichtsgehalt des sulfonierten Copolyesters an Einheiten, abgeleitet von den Oligomeren des Ethylenglykols, zwischen 2 und 30% liegt.

**12.** Verfahren gemäß einem der Ansprüche 1 bis 11, dadurch gekennzeichnet, daß der sulfonierte Copolyester einen Gehalt an wiederkehrenden Einheiten mit Oxysulfonylgruppen in dem Bereich von 2 bis 20% der Gesamtzahl der wiederkehrenden Einheiten gleicher Natur hat.

**13.** Verfahren gemäß einem der Ansprüche 1 bis 12, dadurch gekennzeichnet, daß der sulfonierte Copolyester in Form eines Gemisches mit wenigstens einem nicht-sulfonierten Polyester oder Copolyester verwendet wird.

**14.** Verfahren gemäß Anspruch 13, dadurch gekennzeichnet, daß der nicht-sulfonierte Polyester oder Copolyester aus der Gruppe der kristallisierbaren Polyester und nicht-kristallisierbaren Polyester gewählt ist.

**15.** Verfahren gemäß Anspruch 14, dadurch gekennzeichnet, daß der kristallisierbare Polyester ein Homopolyester oder ein Copolyester, abgeleitet von der Terephthalsäure, mit mindestens 80 Mol-% Terephthalat-Einheiten ist.

**16.** Verfahren gemäß Anspruch 14, dadurch gekennzeichnet, daß der nicht-kristallisierbare Polyester ein Copolyester, abgeleitet von der Terephthalsäure, ist.

**17.** Verfahren gemäß einem der Ansprüche 1 bis 16, dadurch gekennzeichnet, daß der Gewichtsgehalt des Gemisches nicht-sulfonierter Polyester/sulfonierter Copolyester an letzterem so berechnet ist, daß die Zahl der wiederkehrenden Einheiten mit Oxysulfonylgruppen, die in dem Gemisch vorhanden sind, 2 bis 10% der Gesamtzahl der wiederkehrenden Einheiten gleicher Natur, die in dem Gemisch vorhanden sind, darstellt.

**18.** Verfahren gemäß einem der Ansprüche 1 bis 17, dadurch gekennzeichnet, daß man ein Polymerengemisch verwendet, das 20 bis 80 Gew.% sulfonierten Copolyester und 80 bis 20 Gew.% eines nicht-sulfonierten Copolyesters enthält.

**19.** Verfahren gemäß einem der Ansprüche 1 bis 18, dadurch gekennzeichnet, daß der wäßrige Latex, der

zum Beschichten der Schicht (B) verwendet wird, eine Emulsion oder Dispersion eines Polymeren mit mindestens 80 Mol-% Vinylidenchlorid-Einheiten ist.

**20.** Komplexe, orientierte Polyester-Verbundfilme, bestehend aus einem Trägerfilm (A) eines kristallinen oder halb-kristallinen Polyesters, der auf wenigstens einer seiner Seiten eine angrenzende, coextrudierte Schicht eines Haftgrundierungsüberzugs (B) und eine Schicht eines PVDC-Überzugs (C), abgelagert auf der Schicht (B), trägt, dadurch gekennzeichnet, daß diese letztere aus wenigstens einem Copolyester besteht, der eine Vielzahl von wiederkehrenden Einheiten mit Oxysulfonylgruppen gemäß einem der Ansprüche 1 bis 12 enthält.

**21.** Komplexer, orientierter Polyester-Verbundfilm gemäß Anspruch 20, dadurch gekennzeichnet, daß die Haftgrundierungsschicht (B) aus einem Gemisch eines sulfonierten Copolyesters mit wenigstens einem nicht-sulfonierten Polyester oder Copolyester besteht.

Patentansprüche für folgenden Vertragsstaat : ES

**1.** Verfahren zur Herstellung von orientierten Polyester-Verbundfilmen, bestehend aus einem Trägerfilm (A) eines kristallinen oder halb-kristallinen Polyesters, der auf wenigstens einer seiner Seiten eine angrenzende Schicht eines Haftgrundierungsüberzugs (B) und eine Schicht eines PVDC-Überzugs (C) trägt, der auf der genannten Schicht (B) durch Beschichtung mit einem wäßrigen Latex abgelagert ist, dadurch **gekennzeichnet,** daß man die Coextrusion eines kristallisierbaren Polyesters (a) und eines Polymermaterials auf Basis eines Copolyesters durchführt, der eine Vielzahl von Wiederkehrenden Einheiten mit Oxysulfonylgruppen trägt, in Form eines Verbundfilms, der eine Schicht (A) an amorphem Polyester (A) und mindestens eine Schicht (B) enthält, Abkühlen dieses Films, Verstrecken in wenigstens einer Richtung, Thermofixierung des verstreckten Films und dann Beschichten mittels eines wäßrigen PVDC-Latex und schließlich Trocknen des so erhaltenen Überzugs, dann Kristallisation des PVDC.

**2.** Verfahren gemäß Anspruch 1, dadurch gekennzeichnet, daß der kristallisierbare Polyester, der zur Bildung der Schicht (A) verwendet wird, ein Homopolyester oder ein Copolyester der Terephthalsäure ist mit wenigstens 80 Mol-% Terephthalat-Einheiten.

**3.** Verfahren gemäß Anspruch 2, dadurch gekennzeichnet, daß der kristallisierbare Polyester, der zur Bildung der Schicht (A) verwendet wird, das Polyethylen-glykol-terephthalat ist.

**4.** Verfahren gemäß einem der Ansprüche 1 bis 3, dadurch gekennzeichnet, daß der sulfonierte Copolyester, der als Bestandteil der Schicht (B) verwendet wird, eine Vielzahl von Oxysulfonylgruppen der allgemeinen Formel

$(-SO_3)_nM$ (I)

aufweist, worin:
n = 1 oder 2,
M ein Wasserstoffatom, ein Alkalimetall, ein Erdalkalimetall, ein Ammoniumkation, ein quaternäres Ammoniumkation bedeutet.

**5.** Verfahren gemäß einem der Ansprüche 1 bis 4, dadurch gekennzeichnet, daß der sulfonierte Copolyester eine Vielzahl von Einheiten, abgeleitet von aromatischen Disäuren oder deren Derivaten der Formel

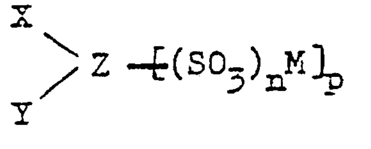

(II)

aufweist, worin:
n = 1 oder 2;
M ein Wasserstoffatom, ein Alkalimetall, ein Erdalkalimetall, ein Ammoniumkation, ein quaternäres

Ammoniumkation bedeutet;

Z ein mehrwertiger, aromatischer Rest ist;

X und Y Hydroxycarbonylreste oder Derivate: Ester von niederen, aliphatischen Alkoholen oder Säurehalogenide (Chlorid, Bromid) sind;

p eine ganze Zahl von 1 oder 2 ist.

6. Verfahren gemäß einem der Ansprüche 1 bis 5, dadurch gekennzeichnet, daß der sulfonierte Copolyester eine Vielzahl von Einheiten, abgeleitet von einer Hydroxysulfonylisophthalsäure, aufweist.

7. Verfahren gemäß einem der Ansprüche 1 bis 6, dadurch gekennzeichnet, daß der sulfonierte Copolyester außerdem eine Vielzahl von Einheiten, abgeleitet von der Terephthalsäure, aufweist.

8. Verfahren gemäß Anspruch 7, dadurch gekennzeichnet, daß der sulfonierte Copolyester gleichzeitig eine Vielzahl von Einheiten, abgeleitet von der Terephthalsäure, und eine Vielzahl von Einheiten, abgeleitet von der Isophthalsäure, aufweist.

9. Verfahren gemäß Anspruch 8, dadurch gekennzeichnet, daß in dem sulfonierten Copolyester die Zahl der Einheiten, abgeleitet von der Isophthalsäure, bis zu 70% der Gesamtheit der Einheiten Terephthalat/Isophthalat darstellt.

10. Verfahren gemäß einem der Ansprüche 1 bis 9, dadurch gekennzeichnet, daß der sulfonierte Copolyester eine Vielzahl von Einheiten, abgeleitet von Ethylenglykol und/oder seinen Oligomeren mit einem Molekulargewicht unter 600, aufweist.

11. Verfahren gemäß Anspruch 10, dadurch gekennzeichnet, daß der Gewichtsgehalt des sulfonierten Copolyesters an Einheiten, abgeleitet von den Oligomeren des Ethylenglykols, zwischen 2 und 30% liegt.

12. Verfahren gemäß einem der Ansprüche 1 bis 11, dadurch gekennzeichnet, daß der sulfonierte Copolyester einen Gehalt an wiederkehrenden Einheiten mit Oxysulfonylgruppen in dem Bereich von 2 bis 20% der Gesamtzahl der wiederkehrenden Einheiten gleicher Natur hat.

13. Verfahren gemäß einem der Ansprüche 1 bis 12, dadurch gekennzeichnet, daß der sulfonierte Copolyester in Form eines Gemisches mit wenigstens einem nicht-sulfonierten Polyester oder Copolyester verwendet wird.

14. Verfahren gemäß Anspruch 13, dadurch gekennzeichnet, daß der nicht-sulfonierte Polyester oder Copolyester aus der Gruppe der kristallisierbaren Polyester und nicht-kristallisierbaren Polyester gewählt ist.

15. Verfahren gemäß Anspruch 14, dadurch gekennzeichnet, daß der kristallisierbare Polyester ein Homopolyester oder ein Copolyester, abgeleitet von der Terephthalsäure, mit mindestens 80 Mol-% Terephthalat-Einheiten ist.

16. Verfahren gemäß Anspruch 14, dadurch gekennzeichnet, daß der nicht-kristallisierbare Polyester ein Copolyester, abgeleitet von der Terephthalsäure, ist.

17. Verfahren gemäß einem der Ansprüche 1 bis 16, dadurch gekennzeichnet, daß der Gewichtsgehalt des Gemisches nicht-sulfonierter Polyester/sulfonierter Copolyester an letzterem so berechnet ist, daß die Zahl der wiederkehrenden Einheiten mit Oxysulfonylgruppen, die in dem Gemisch vorhanden sind, 2 bis 10% der Gesamtzahl der wiederkehrenden Einheiten gleicher Natur, die in dem Gemisch vorhanden sind, darstellt.

18. Verfahren gemäß einem der Ansprüche 1 bis 17, dadurch gekennzeichnet, daß man ein Polymerengemisch verwendet, das 20 bis 80 Gew.% sulfonierten Copolyester und 80 bis 20 Gew.% eines nicht-sulfonierten Copolyersters enthält.

19. Verfahren gemäß einem der Ansprüche 1 bis 18, dadurch gekennzeichnet, daß der wäßrige Latex, der

zum Beschichten der Schicht (B) verwendet wird, eine Emulsion oder Dispersion eines Polymeren mit mindestens 80 Mol-% Vinylidenchlorid-Einheiten ist.